(19) Europäisches Patentamt

European Patent Office

Office européen des brevets

(11) **EP 1 073 055 A2**

(12) **EUROPEAN PATENT APPLICATION**

(43) Date of publication:
**31.01.2001 Bulletin 2001/05**

(51) Int. Cl.$^7$: **G11B 27/00**, G11B 20/10

(21) Application number: **00115042.4**

(22) Date of filing: **25.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.07.1999 JP 21127899**

(71) Applicant: **Pioneer Corporation**
**Meguro-ku, Tokyo (JP)**

(72) Inventors:
  • **Yamada, Youichi,**
    **Pioneer Corp., Tokorozawa Works**
    **Saitama-ken (JP)**
  • **Funada, Takeaki**
    **Pioneer Corp.,Tokorozawa Works**
    **Saitama-ken (JP)**
  • **Kamei, Kazuo**
    **Pioneer Corp., Tokorozawa Works**
    **Saitama-ken (JP)**

  • **Inoshita, Gen,**
    **Pioneer Corp., Ohmori Works**
    **Ohta-ku, Tokyo-to (JP)**
  • **Atsumi, Kou,**
    **Pioneer Corp., Ohmori Works**
    **Ohta-ku, Tokyo-to (JP)**
  • **Takagaki, Junichi,**
    **Pioneer Corp., Tokorozawa Works**
    **Tokorozawa-shi, Saitama-ken (JP)**
  • **Yagi, Akiharu,**
    **Pioneer Corp., Tokorozawa Works**
    **Tokorozawa-shi, Saitama-ken (JP)**

(74) Representative:
**Klingseisen, Franz, Dipl.-Ing. et al**
**Patentanwälte,**
**Dr. F. Zumstein,**
**Dipl.-Ing. F. Klingseisen,**
**Postfach 10 15 61**
**80089 München (DE)**

(54) **Apparatus and method for reproducing audio information**

(57) An apparatus for reproducing one audio information with another audio information provided with: a detecting device (15) for detecting the first time length between each beat and the next in the another audio information, and an adjusting device (24) for adjusting the second time length between each beat and the next in the one audio information so that the ratio of the second time length to the first time length is indicted as natural number or the reciprocal of natural number.

FIG. 2

EP 1 073 055 A2

**Description**

BACKGROUND OF THE INVENTION

1. Field of the Invention

The present invention relates to apparatus and method for reproducing audio information. Further in detail, the present invention relates to the apparatus and the method for sampling a part of audio information such as tunes for dancing, and combining it with another audio information.

2. Description of the Related Art

A conventional audio information storing and controlling device, so called a sampler, is generalized. The device samples a part of a tune from the tune, and stores it temporarily to combine it with another tune and output a new tune. In the conventional sampler start and end timing of sampling the part in a tune is freely designated by a user.

Incidentally, in recent years a nightclub for dancing to live and recorded music is in fashion. In this kind of nightclub it is required that a plurality of tunes are kept playing at a constant rhythm continuously even in the interval between difference tunes.

Rhythm is defined as an ordered recurrent alternation of strong and weak elements in the flow of sound of a tune, that is, beat.

Further one who keeps playing the tunes is called a disc jockey. He selects and combines some tunes outputted from a plurality of reproduction devices to keep playing at a constant rhythm continuously even in the interval between difference tunes.

He also samples a part from the tune, and plays it repeatedly while combining it with another tune by using the sampler.

In the case that a stored part of a tune is combined with another tune and the combined tune is reproduced in the nightclub by using the conventional sampler, an operation of keeping conformity of rhythms between the stored part of the tune and the another tune is performed as follows: The disc jockey listens the another tune, while synchronizing the rhythm of the stored part of the tune to the rhythm of the another tune, and combines the stored part of the tune with the another tune.

Further listens the another tune while adjusting the timing of combining the stored part of the tune with the another tune.

However, according to the conventional manner of the combining, if he makes a mistake for synchronizing the rhythms, the rhythm of stored part of the tune is not in time to the another tune. As a result, if the combined tune is played in the nightclub, the tune is getting out of rhythm so that it is inconvenience to people who is dancing.

Further if he makes a mistake for adjusting the timing of the combining, the rhythm of stored part of the tune is not in time to the another tune.

SUMMARY OF THE INVENTION

It is therefore an object of the present invention to provide apparatus and method for storing and controlling audio information and apparatus for outputting audio information which can prevent the reproduced tune from giving an audience uncomfortable auditory feeling caused by unconformity of rhythm and can combine the tunes appropriately in the case that a tune or a part of the tune is reproduced while it is combined with another tune, and the combined tune is reproduced.

The above object of the present invention can be achieved by an apparatus for reproducing one audio information with another audio information. The apparatus for reproducing one audio information with another audio information is provided with: a detecting device for detecting the first time length between each beat and the next in the another audio information, and an adjusting device for adjusting the second time length between each beat and the next in the one audio information so that the ratio of the second time length to the first time length is indicted as natural number or the reciprocal of natural number.

According to the apparatus for reproducing one audio information with another audio information, a detecting device detects the first time length between each beat and the next in the another audio information. Then adjusting device adjusts the second time length between each beat and the next in the one audio information so that the ratio of the second time length to the first time length is indicted as natural number or the reciprocal of natural number.

Therefore the ratio of the second time length to the first time length is indicted as natural number or the reciprocal of natural number, so that the another audio information has correlation to the one audio information. As a result, if the one audio information is combined with the another audio information, the combined tune can be reproduced without giving an audience uncomfortable auditory feeling.

In one aspect of the apparatus for reproducing one audio information with another audio information, said adjusting device adjusts the second time length so that the ratio is indicted as 1.

According to this aspect, the rhythm of the another audio information is in time to that of the one audio information. Therefore if the one audio information is combined with the another audio information, the combined tune can be reproduced without giving an audience uncomfortable auditory feeling.

In another aspect of the apparatus for reproducing one audio information with another audio information, a memory device memorizes the one audio information and the second time length in advance, and a reading device reads the memorized one audio information and the memorized second time length.

According to this aspect, the memorized one audio information and the memorized second time length is read, and the second time length is adjusted in the above-mentioned manner. Therefore it is easy to adjust the second time length so that the ratio of the second time length to the first time length is indicted as natural number or the reciprocal of natural number.

In another aspect of the apparatus for reproducing one audio information with another audio information, an combining device synchronizes a start timing of each beat having the adjusted second time length in the one audio information with that of each beat in the another audio information. Further the combining device concurrently combines the one audio information with the another audio information.

According to this aspect, if the one audio information is combined with the another audio information, the combined tune can be reproduced without giving an audience uncomfortable auditory feeling and getting out of the rhythm of the one audio information and the another audio information.

The above object of the present invention can be achieved by an apparatus for reproducing one audio information with another audio information. The apparatus for reproducing one audio information with another audio information is provided with: a detecting device for detecting a time length between each beat and the next in the another audio information; a designating device for designating the number of beats corresponding to the cycle period of the repeated audio information, and a repeating device for repeating the one audio information on the basis of the detected time length and the designated number of beats.

According to the apparatus for reproducing one audio information with another audio information, a detecting device detects a time length between each, beat and the next in the another audio information. Further a designating device designates the number of beats corresponding to the cycle period of the repeated audio information. Then a repeating device repeats the one audio information on the basis of the detected time length and the designated number of beats.

Therefore the one audio information is repeatedly reproduced on the basis of the detected time length and the designated number of beats, so that the another audio information has correlation to the one audio information. As a result, if the one audio information is combined with the another audio information, the combined tune can be reproduced without giving an audience uncomfortable auditory feeling.

In one aspect of the apparatus for reproducing one audio information with another audio information, repeating device synchronizes a timing of each beat in the another audio information with that of each beat in the one audio information. Further repeating device repeats the one audio information on the basis of the detected time length and the designated number of beats.

According to this aspect, if the one audio information is combined with the another audio information, the combined tune can be reproduced without giving an audience uncomfortable auditory feeling and getting out of the rhythm of the one audio information and the another audio information.

The above object of the present invention can be achieved by a method of reproducing one audio information with another audio information. The method of reproducing one audio information with another audio information is provided with: a detecting process of detecting the first time length between each beat and the next in the another audio information, and an adjusting process of adjusting the second time length between each beat and the next in the one audio information so that the ratio of the second time length to the first time length is indicted as natural number or the reciprocal of natural number.

According to the method of reproducing one audio information with another audio information, a detecting process detects the first time length between each beat and the next in the another audio information. Then adjusting process adjusts the second time length between each beat and the next in the one audio information so that the ratio of the second time length to the first time length is indicted as natural number or the reciprocal of natural number.

Therefore the ratio of the second time length to the first time length is indicted as natural number or the reciprocal of natural number, so that the another audio information has correlation to the one audio information. As a result, if the one audio information is combined with the another audio information, the combined tune can be reproduced without giving an audience uncomfortable auditory feeling.

In one aspect of the method of reproducing one audio information with another audio information, said adjusting process adjusts the second time length so that the ratio is indicted as 1.

According to this aspect, the rhythm of the another audio information is in time to that of the one audio information. Therefore if the one audio information is combined with the another audio information, the combined tune can be reproduced without giving an audience uncomfortable auditory feeling.

In another aspect of the method of reproducing one audio information with another audio information, a memorizing process memorizes previously the one audio information and the second time length in a memory, and a reading process reads the memorized one audio information and the memorized second time length.

According to this aspect, the memorized one audio information and the memorized second time length is read, and the second time length is adjusted in the above-mentioned manner. Therefore it is easy to adjust the second time length so that the ratio of the second time length to the first time length is indicted as natural number or the reciprocal of natural number.

In another aspect of the method of reproducing one audio information with another audio information, an combining process synchronizes a start timing of each beat having the adjusted second time length in the one audio information with that of each beat in the another audio information. Further the combining process concurrently combines the one audio information with the another audio information.

According to this aspect, if the one audio information is combined with the another audio information, the combined tune can be reproduced without giving an audience uncomfortable auditory feeling and getting out of the rhythm of the one audio information and the another audio information.

The above object of the present invention can be achieved by a method of reproducing repeatedly one audio information to reproduce the repeated audio information with another audio information. The method of reproducing repeatedly one audio information to reproduce the repeated audio information with another audio information is provided with: a detecting process of detecting a time length between each beat and the next in the another audio information; a designating process of designating the number of beats corresponding to the cycle period of the repeated audio information, and a repeating process of repeating the one audio information on the basis of the detected time length and the designated number of beats.

According to the method of reproducing repeatedly one audio information to reproduce the repeated audio information with another audio information, a detecting process detects a time length between each beat and the next in the another audio information. Further a designating process designates the number of beats corresponding to the cycle period of the repeated audio information. Then a repeating process repeats the one audio information on the basis of the detected time length and the designated number of beats.

Therefore the one audio information is repeatedly reproduced on the basis of the detected time length and the designated number of beats, so that the another audio information has correlation to the one audio information. As a result, if the one audio information is combined with the another audio information, the combined tune can be reproduced without giving an audience uncomfortable auditory feeling.

In one aspect of the method of reproducing one audio information with another audio information, repeating process synchronizes a timing of each beat in the another audio information with that of each beat in the one audio information. Further repeating process repeats the one audio information on the basis of the detected time length and the designated number of beats.

According to this aspect, if the one audio information is combined with the another audio information, the combined tune can be reproduced without giving an audience uncomfortable auditory feeling and getting out of the rhythm of the one audio information and the another audio information.

BRIEF DESCRIPTION OF THE DRAWINGS

FIG. 1 is a block diagram for showing outline construction of an audio information reproducing device as an embodiment of the present invention;
FIG. 2 is a block diagram for showing detail construction of a mixer of the audio information reproducing device as an embodiment of the present invention;
FIG. 3 is a flow diagram for showing the processing of sampling as an embodiment of the present invention;
FIG. 4 is a flow diagram for showing the processing of reproduction control as an embodiment of the present invention;
FIG. 5 is a schematic diagram for showing the processing of reproduction control as an embodiment of the present invention (No. 1), and
FIG. 6 is a schematic diagram for showing the processing of reproduction control as an embodiment of the present invention (No. 2).

DETAILED DESCRIPTION OF THE PREFERRED EMBODIMENTS

Referring to the accompanying drawings, an embodiment of the present invention will be explained.

In the embodiment, the present invention is adapted for an audio information outputting device for playing tunes in a place like the nightclub. Further the device includes a mixer which combines tunes outputted from a plurality of players and composes a tune for play.

(I) Entire Construction of the Device

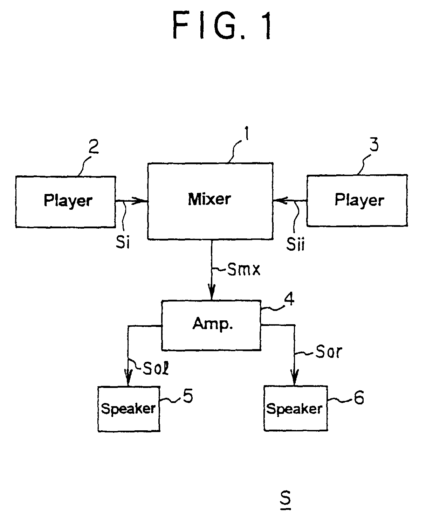

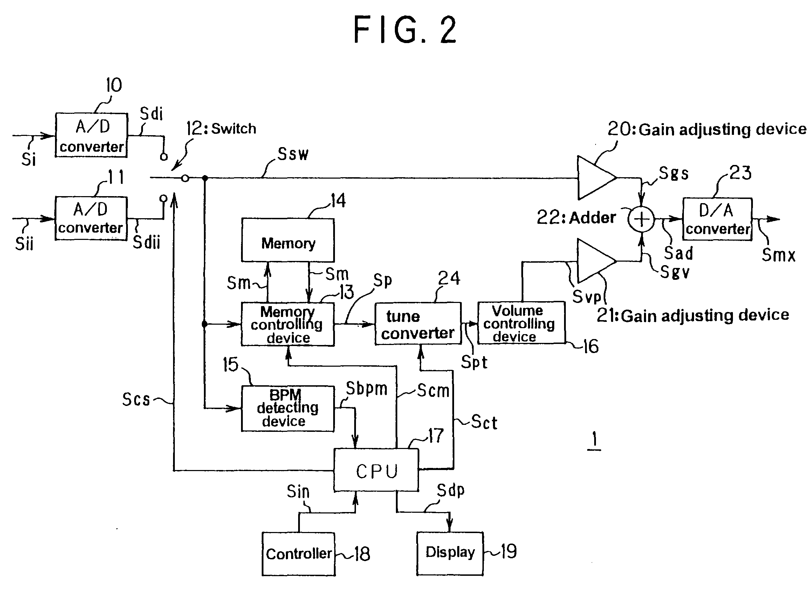

The entire construction and operation of the device will be explained referring to FIG. 1 and FIG. 2.

At first, the outline of construction and operation of the device will be explained referring to FIG. 1. FIG. 1 is a block diagram for showing the outline of construction of the device in the embodiment.

As shown in FIG. 1, an audio information outputting device S in the embodiment includes a mixer 1, a player 2, a player 3, an amplifier 4, a speaker 5, and a speaker 6. The player 2, 3 may be an analog player reproducing an analog record, or a digital player reproducing a CD (Compact Disc) or a DVD in digital scheme.

Next, the outline of the device S will be explained. Each of a player 2, 3 respectively reproduces an analog record, a CD or the like, respectively generating a tune signal Si and a tune signal Sii including a plurality of tunes, respectively outputting the signals to the mixer 1.

According to operation by the disc jockey, the mixer 1 combines the tune signals Si and Sii, generating a mixer signal Smx, outputting it to the amplifier 4.

The amplifier 4 separates a signal for a left channel and a signal for a right channel from each of tunes included in the mixer signal Smx. The amplifier 4 also amplifies the signals generating a left signal Sol and a right signal Sor. The left signal Sol includes audio information to be included in the left channel. The right signal Sor includes information to be included in the right channel. The audio information includes both of sound information regarding to sound of a musical instrument, etc., and voice information regarding to a singing voice, etc. Hereinafter the audio information is defined in the same way. Further the amplifier 4 outputs the left signal Sol to the speaker 5 for the left channel and the right signal Sor to the speaker 6 for the right channel.

In this manner the audio information included in the left signal Sol and the right signal Sor is outputted as a sound in the nightclub by the speakers 5, 6.

An operation of combining the first tune included in the tune signal Si and the second tune included in the tune signal Sii is performed in the mixer 1 as follows: For example, the first tune is audibly reproduced in the nightclub. Concurrently the second tune is reproduced so that only the disc jockey can listen it, for example, by using a headphone while adjusting rhythm of the second tune so that rhythm of the first tune is in time to rhythm of the second tune. Then if the ending of the first tune is getting near, a part near the ending is faded out. That is, sound pressure level of the part is being decreased gradually according to passage of time and gotten to zero eventually. Then an introduction part of the second tune is continuously fade in. That is, sound pressure level of the introduction part is being increased gradually according to passage of time and gotten to original level eventually. In this manner the combining operation has completed.

Further in the mixer 1 the below-mentioned sampling operation is also executed so that a part of tune reproduced by the player 2 is sampled and the sampled part is combined with another tune reproduced by the player 3.

Next, the detail construction and operation of the mixer 1 will be explained referring to FIG. 2.

As shown in FIG. 2, the mixer 1 of the embodiment includes A/D (Analog to Digital) converters 10, 11, a switch 12, a memory controlling device 13, a memory 14, BPM (Beat Per Minute) detecting device 15, a volume controlling device 16, a CPU 17, a controller 18, display 19, a gain adjusting devices 20, 21, an adding device 22, a D/A (Digital to Analog) converter 23, and a tune converter 24.

Next, each of components will be explained. The A/D converter 10 converts the tune signal Si, which is an analog signal outputted by the player 2, into a digital signal, and generates a digital tune signal Sdi, and outputs it to one of two input terminals of the switch 12.

The A/D converter 11 converts the tune signal Sii, which is an analog signal outputted by the player 3, into a digital signal, and generates a digital tune signal Sdii, and outputs it to the other of two input terminals of the switch 12.

The switch 12 selects either the digital tune signal Sdi or the digital tune signal Sdii as a switch signal Ssw according to the below-mentioned control signal Scs outputted by the CPU 17, and outputs the switch signal Ssw to the gain adjusting devices 20, the memory controlling device 13, and the BPM detecting device 15.

The BPM detecting device 15 detects the number of beat per a minute (hereinafter called the value of BPM) in a tune for sampling in the manner of the present invention which is one of the tunes included in the switch signal Ssw, and generates a detection signal Sbpm, and outputs it to the CPU 17.

The operation of detecting the value of BPM by the BPM detecting device 15 is specifically explained as follows: At first the time length between each beat and the next in the tune for sampling is continuously detected in definite period of time. Then the value of BPM is calculated on the basis of statistics on the time length detected in the definite period. Further detail explanation of the detecting operation is discloses in Japanese Patent Laid-open No. H08-201542.

The beat is defined as each part of rhythmic stresses repeated in a cycle of rhythm of a tune, and consists of downbeats and upbeats. A downbeat is defined as an accented beat in a bar, especially the first beat in a bar, corresponding to the downward stroke of a conductor. An upbeat is defined as an unaccented beat in a bar. In duple time the order of the beats is as downbeat-upbeat. In triple time the order of the beats is as downbeat-upbeat-upbeat. In quadruple time the order of the beats is as downbeat-upbeat-downbeat-upbeat.

Therefore it is obvious that the value of BMP indicates the speed of playing a tune. Even in one tune, if the value of BMP is high the playing time becomes short, if the the value of BMP is low the playing time becomes long.

The number of the beats for sampling and the start timing of sampling are indicated through some operations on the controller 18 by the disc jockey. If the some operations are performed, the controller 18 generates an operation signal Sin. Then the CPU 17 generates the control signal Ssw on the basis of the operation signal Sin, and controls the operation of the switch 12.

Further the CPU 17 calculates a sampling time on the basis of the detection signal Sbpm, and generates another control signal Scm for controlling the processing of sampling in the memory control device 13, and outputs the control signal Scm to the memory control device 13.

Concurrently, the CPU 17 generates a control signal Sct on the basis of an operational signal Sin and outputs it to the tune converter 24 in order to control the processing of controlling reproduction at the tune converter 24. The operational signal Sin is generated by the controller 18 if the operation of designation of expansion and contraction mode for expanding and contracting reproduction time of a sampled part of a tune or of cycle period designation mode for designating a cycle period of repeating the sampled part.

In addition to the above-mentioned operation, an operation for designating general performance of the mixer 1 is performed on the controller 18.

Information regarding to the operation of the mixer 1 controlled by the CPU 17, which is specifically the value of BPM, the number of the beats designated on the controller 18, and the like, is outputted as the display signal Sdp by the CPU 17, and is displayed to the disc jockey by the display 19.

The memory control device 13 samples a part of the designated tune included in the switch signal Ssw on the basis of the control signal Scm, and outputs the part to the memory 14 as a memory signal Sm, and stores it in the memory 14 temporarily. Further the memory control device 13 read the part of the tune stored in the memory 14 as the memory signal Sm if an operation for combining the part with another tune and outputting it is selected. Then the memory control device 13 outputs the part of the tune to the tune converter 24 as a sampling signal Sp.

The tune converter 24 controls a reproduction time and a cycle period of the reproduction of the part of the tune included in the sampling signal Sp on the basis of the control signal Sct, and generate a reproduction signal Spt, and outputs the volume control device 16.

The volume control device 16 adjusts a level of the reproduction signal Spt in a conventional manner, and generates an adjusted reproduction signal Svp, and outputs it to the gain adjusting device 21.

The gain adjusting devices 20, 21 adjust a gain of adjusted sampling signal Svp and the switch signal Ssw cooperating each other, and respectively generate an adjust signal Sgs, Sgv, and output them to the adder 22. If the part of the tune is sampled, the adjust signal Sgs includes an original tune and the adjust signal Sgv includes the sampled part of the tune whose reproduction time is controlled by the tune converter 24.

The adder 22 combines the adjust signal Sgv with the adjust signal Sgs, and generates an adder signal Sad, and outputs it to the D/A converter 23. In the adder signal Sad the part of the tune included in the adjust signal Sgv is combined with the tune included in the adjust signal Sgs.

The D/A converter converts the adder signal Sad into an analog signal, and generates the mixer signal Smx, and outputs it to the amplifier 4.

In addition to the above-mentioned operation, if the sampling for a part of a tune is not performed, undescribed combining device in the mixer 1 combines original tunes each other, and generates a mixer signal Smx.

(II) Embodiment of the Processing of Samoling

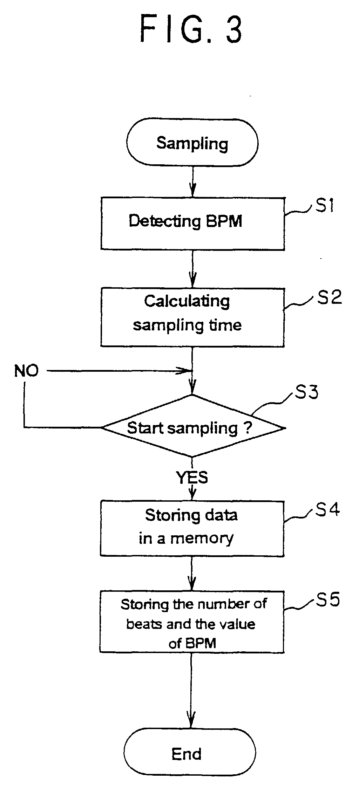

Next, the processing of sampling which is performed in the mixer 1 is explained referring to FIG. 3. FIG. 3 is a flow diagram for showing the processing of sampling.

In the below-mentioned explanation, a part of a tune included in the tune signal Si is sampled and stored in the memory 14. Further the part is combined with another tune included in the tune signal Sii and outputted.

As shown in FIG .3, for sampling the part of the tune included in the tune signal Si, the switch 12 is switched to a side of the tune signal Si on the basis of the control signal Scs outputted by the CPU 17. The tune signal Si is outputted to the gain adjusting device 20, the memory controlling device 13, and the BPM detecting device 15 as the switch signal Ssw. The tune included in the tune signal Si may be reproduced in the place like a nightclub by being adjusted a gain of the switch signal Ssw in the gain adjusting device 20, and outputted through the adder 22 and D/A converter 23. Moreover the output of switch signal Ssw may be suspended in the gain adjusting device 20.

The BPM detecting device 15 detects the value of BPM in a tune included in the switch signal Ssw, which will be sampled (Step S1).

After detecting the value of BPM in the tune for sampling, a sampling time is calculated by the CPU 17 on the basis of the number of the beats for sampling designated on the controller by the disc jockey (Step S2).

Specifically, for example, assuming that the value of BPM of the tune is 120 and the number of the beats is 4, the sampling time Tsmp calculated in the Step S2 is described as follows:

$$Tsmp = (60000ms / 120) \times 4 = 2000 \text{ ms} \qquad (1)$$

The sampling time Tsmp calciated by the processing of the Step S1 and S2 has the time length of integral multiples ( in the above formula 4 times )to the time length of one beat in the tune for sampling ( in the above formula (60000ms / 120) ).

After calculating the sampling time Tsmp, it is determined whether the part for sampling is reproduced in the present reproduced tune. Namely, it is determined whether the start timing for sampling has reached (Step S3). If the sampling is not started (Step S3; NO), the processing is on standby state until the start timing for sampling reaches. If the sampling is started (Step S3; YES), the processing transits to the next processing described in Step S4.

There are a variety of ways for the determination in the Step S3. Specifically, for example, it may be determined that the start timing for sampling reaches when the disc jockey presses undescribed switch for starting on the controller 18. In addition to the example, it may be determined that the start timing for sampling reaches when a sound pressure level at reproducing in the tune for sampling is higher than prescribed level (for example, - 60 dB).

The latter manner is used in case as follows: If the disc jockey finds the beginning of the tune for sampling and starts playing it, a sound pressure level of the tune becomes higher than prescribed level at some time after starting. Then it is determined that the start timing for sampling reaches at the time.

In Step S1 the value of BPM is detected. Therefore in both of manners for determining in Step S3, it may be determined that the start timing for sampling reaches on the basis of the timing of the beats in the tune for sampling.

After it is determined that the start timing for sampling reaches (Step S3), the tune for sampling included in the tune signal Si is stored in the memory 14 only for the period of the sampling time calculated in the Step S2 as the memory signal Sm (Step S4).

After the sampled part of the tune is stored, the value of BPM detected in the Step S1 and the number of the beats designated by the disc jockey in the Step S2 are stored in the memory 14, brought into correspondence with the stored part (Step S5). Then the processing of sampling is ended.

According to a series of sampling process as mentioned above, in case of describing in the formula (1), a tune, selected out of the tunes included in the tune signal Si, corresponding to 4 beats which is started for the beat designated by the disc jockey is stored in the memory 14.

Hereafter, as mentioned above, after the processing of reproduction control is performed to the sampled part by the tune converter 24, the sampled part is combined with another tune.

(III) Embodiment of Controlling of Reproduction

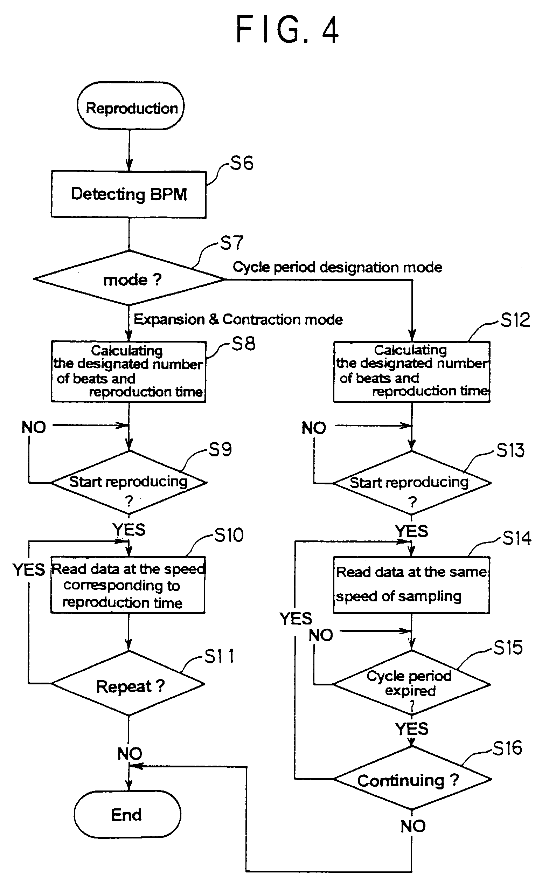

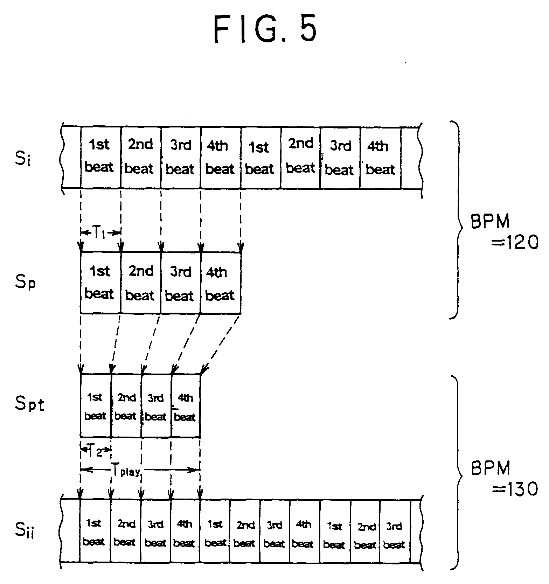

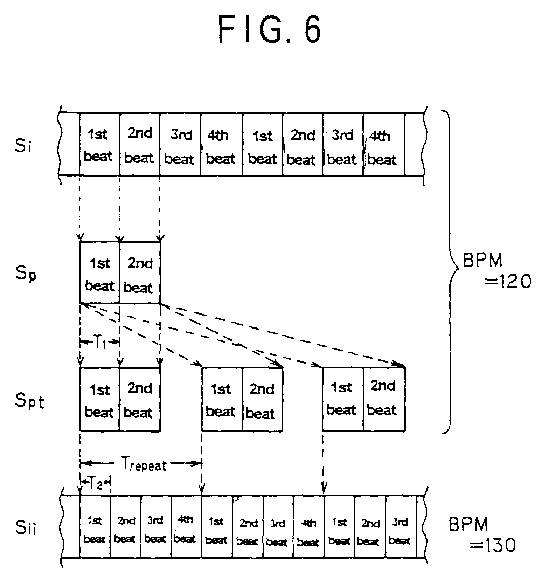

Next, the processing of reproduction control which is performed in the tune converter 24 is explained referring to FIG. 4 to FIG. 6. FIG. 4 is a flow diagram for showing the processing of reproduction control. FIG. 4 is a flow diagram for showing the processing of reproduction control. FIG. 5 and FIG. 6 are schematic diagrams for showing the processing of reproduction control.

In the below-mentioned explanation, the processing of reproduction control which is performed to the sampled part of the tune read from the memory 14 by the memory controlling device 13. Further the sampled part is combined with another tune included in the tune signal Sii and outputted.

As shown in FIG .4, in a reproduction mode, for reading the sampled part and combining it with a tune included in the tune signal Sii to output, the switch 12 is switched to a side of the tune signal Sii on the basis of the control signal Scs outputted by the CPU 17. The tune signal Sii is outputted to the gain adjusting device 20, the memory controlling device 13, and the BPM detecting device 15 as the switch signal Ssw.

The memory controlling device 13 performs no operation for the switch signal Ssw, and only an operation of reading the sampled part of the tune from the memory 14.

The BPM detecting device 15 detects the value of BPM in a tune included in the switch signal Ssw, i.e., a tune included in the tune signal Sii combined with the sampled part to output (Step S6).

After the value of BPM is detected in the tune in the tune signal Sii, on the basis of the control signal Sin, the CPU 17 determines whether the designation of a mode for reproducing the sampled part of the tune is performed on the controller 18 by the disc jockey (Step S7).

If the CPU 17 determines that the designation of expansion and contraction mode for expanding and contracting a reproduction time of the sampled part to reproduce is performed (Step S7), the CPU 17 calculates the reproduction time of the sampled part of the tune on the basis of the designated number of the beats to reproduce on the controller 18 by the disc jockey and the value of BPM detected in the Step S6 (Step S8). A tune having time length corresponding to the designated number of the beats in the sampled part is combined with the tune included in the tune signal Sii to reproduce.

Specifically, for example, it is assumed that the value of BPM of the tune included in the tune signal Sii, with which the sampled part is combined, is 130 and the designated number of the beats is 4, that is, a tune having time length corresponding to 4 beats in the sampled part is combined with the tune included in the tune signal Sii. In case as shown in FIG. 3, all of the sampled part is combined. Assuming that, the reproduction time Tplay calculated in the Step S8 is described as follows:

$$Tplay = (60000ms / 130) \times 4 \fallingdotseq 1846 \ ms \qquad (2)$$

After calculating the reproduction time Tply, it is determined whether the designation of combining the sampled part and the tune included in the tune signal Sii is performed on the controller 18 by the disc jockey (Step S9). If the designation is not performed (Step S9; NO), the processing is on standby state until the designation is performed. If the designation is performed (Step S9; YES), the sampled part is read from the memory 14 by the memory controller 13 as a sampling signal Sp. Then a tune having time length corresponding to the designated number of the beats in the read part is reproduced for the reproduction time Tply as a reproduction signal Spt. Further the reproduction signal Spt is outputted to the volume controlling device 16 (Step S10).

In case of corresponding to the formula (2), as shown in FIG. 5, a tune having time length and timing corresponding to 4 beats from the original tune Si, whose the value of BPM is 120, is sampled and stored in the memory 14. Then a reproduction time of the sampled part read as the sampling signal Sp, having time length and timing corresponding to 4 beats and described as "Sp" in FIG. 5, is converted into the reproduction time Tplay calculated in the Step S8. Then the converted signal Spt described as "Sp" in FIG. 5 is outputted.

The tune converter 24 skips data to generate the reproduction signal Spt while reproducing if the sampling time is longer than the reproduction time. The tune converter 24 also repeats data to generate the reproduction signal Spt while reproducing if the sampling time is shorter than the reproduction time. The sampling time is calculated in the Step S5 by using the value of BPM and the designated number of the beats stored in the memory 14. In case as shown in FIG. 5, the sampling time is calculated as 2000 ms according to the formula (1). The reproducing rate with skipping and repeating in the tune converter 24 is calculated by dividing the sampling time by the reproduction time. The reproduction time is calculated by using the formula (2).

Specifically, in case as shown in FIG. 5, the part corresponding to 4 beats is sampled from the tune whose the value of BPM is 120. Then the part is combined to reproduce with the tune whose the value of BPM is 130 included in the tune signal Sii. Therefore the reproducing rate with skipping is calculated by usig the formula (1), (2) as follows:

$$2000 \text{ ms} / 1846 \text{ ms} = 1.0834 \qquad (3)$$

Accordingly, the tune converter 24 reproduces the tune with skipping at the 1.0834 times speed.

In this case, a time length of one beat in the sampled part is $T_1$ when it is stored in the memory 14 as shown in FIG. 5. However, the time length is converted from $T_1$ into $T_2$ as shown in FIG. 5. The ratio of the time length $T_1$ to the time length $T_2$ is described as follows:

$$T_1 / T_2 = 120 / 130 \qquad (4)$$

For expanding and contracting the reproduction time in the Step S10, in addition to the above-mentioned reproduction with skipping and repeating, the way of controlling a cycle of a clock signal which manages a converting operation of the tune converter 24 may be adopted. A reading time for the reproduction signal Spt can be lengthened by controlling the cycle of the clock if the sampling time is shorter than the reproduction time. The reading time for the reproduction signal Spt also can be shortened by controlling the cycle of the clock if the sampling time is longer than the reproduction time. Then the reproduction time can be expanded and contracted by the reading time is lengthened and shortened.

As mentioned above, the sampled part of the tune is outputted as the reproduction signal Spt (Step S10). Then it is determined whether the operation of designating for reproducing the sampled part repeatedly and continuously to combine it with the tune included in the tune signal Sii is performed on the controller 18 by the disc jockey (Step S11). If the operation is not performed (Step S11; NO), the reproduction of the sampled part is ended. If the operation is performed (Step S11; YES), the processing in the Step S10 is repeated to reproduce the sampled part repeatedly just after the reproduction of the sampled part as the reproduction signal Spt is completed.

After that processing, the volume control device 16 adjusts a level of the reproduction signal Spt, which is reproduced for the reproduction time Tplay, and generates the adjusted reproduction signal Svp. Then the processing of combining the adjusted reproduction signal Svp and another tune included in the tune signal Sii reproduced by the player 3 is performed by the adder 22 and the gain adjusting devices 20, 21 from the timing designated by the disc jockey in the Step S9. The combined signal is described as "Sii" in FIG. 5. Then the mixer signal Smx including the combined signal is generated and reproduced in the nightclub through the amplifier 4 and the speaker 5, 6.

In case as shown in FIG. 5, a timing of the combining is designated in the Step S9 so that a timing of beats in the reproduction signal Spt is in time to a timing of beats in the another tune included in the tune signal Sii.

Next, another processing after the Step S7 is explained if the CPU 17 determines that the designation of cycle period designation mode for designating a cycle period of repeating the sampled part is performed (Step S7).

In this case, the CPU 17 calculates the cycle period of repeating the sampled part on the basis of the number of the beats in the tune signal Sii corresponding to the cycle period of the repeat reproduction designated on the controller 18 by the disc jockey and the value of BPM detected in the Step S6 (Step S12). The cycle period is one for reproducing repeatedly the combined tune of the sampled part and the tune included in the tune signal Sii.

Specifically, for example, assuming that the value of BPM of the tune included in the tune signal Sii is 130, and a time length of the sampled part corresponds to 2 beats in the tune included in the tune signal Si, and the sampled part is repeatedly reproduced with a cycle period corresponding to 4 beats in the tune signal Sii, the cycle period Trepeat calculated in the Step S12 is described as follows:

$$Trepeat = (60000ms / 130) \times 4 \fallingdotseq 1846 \ ms \quad (3)$$

After calculating the cycle period Trepeat, it is determined whether the designation of combining the sampled part and the tune included in the tune signal Sii is performed on the controller 18 by the disc jockey (Step S13). If the designation is not performed (Step S13; NO), the processing is on standby state until the designation is performed. If the designation is performed (Step S13; YES), the sampled part is read from the memory 14 by the memory controlling device 13 as a sampling signal Sp. Then the sampling signal Sp is reproduced for the reproduction time, which is the sampling time, and outputted to the volume controlling device 16 as the reproduction signal Spt (Step S14).

In case of corresponding to the formula (3), as shown in FIG. 2, a tune having time length and timing corresponding to 2 beats in the original tune signal Si is sampled and stored in the memory 14. Then the sampled part read as the sampling signal Sp described as "Sp" in FIG. 6, is outputted as reproduction signal Spt without the reproduction time is changed. The signal Spt is described as "Spt" in FIG. 6. In this case the time length $T_1$, which is one of a beat in the sampled part, is not changed.

After the samples part is outputted once as the reproduction signal Spt (Step S14), it is determined whether the cycle period Trepeat calculated in the Step S12 is expired (Step S15). If it is not expired (Step S15; NO), the processing is on standby state until it is expired.

If the cycle period Trepeat is expired (Step S15; YES), it is determined whether the designation of repeating the sampled part with the cycle period Trepeat and of combining the sampled part and the tune included in the tune signal Sii is performed on the controller 18 by the disc jockey (Step S16). If the designation is not performed (Step S16; NO), the reproduction of the sampled part is ended. If the designation is performed (Step S16; YES), the processing in the Step S14 and S15 are repeated to reproduce the samples part repeatedly, which is reproduced once as the reproduction signal Spt, with the cycle period Trepeat.

After that processing, the volume control device 16 adjusts a level of the reproduction signal Spt, which is reproduced repeatedly with the cycle period Trepeat, and generates the adjusted reproduction signal Svp. Then the processing of combining the adjusted reproduction signal Svp and another tune included in the tune signal Sii reproduced by the player 3 is performed every the cycle period Trepeat by the adder 22 and the gain adjusting devices 20, 21 from the timing designated by the disc jockey in the Step S13. The combined signal is described as "Sii" in FIG. 6. Then the mixer signal Smx including the combined signal is generated and reproduced in the nightclub through the amplifier 4 and the speaker 5, 6.

In case as shown in FIG. 6, a timing of the combining is designated in the Step S13 so that a start timing of beats in the reproduction signal Spt is in time to a start timing of beats in the another tune included in the tune signal Sii.

Further in case as shown in FIG. 6, a time length $T_1$ which is one of one beat in the sampled part included in the reproduction signal Spt, is not equal to a time length $T_2$ which is one of one beat in the tune included in the tune signal Sii.

In the cycle period designation mode, if the value of BPM in the tune for sampling included in the tune signal Si is equal to the value of BPM in the tune included in the tune signal Sii, the time length $T_1$ is equal to the time length $T_2$.

As explained above, according to the processing of reproduction control in the mixer 1 of the embodiment, the time length $T_1$ which is one of one beat in the sampled part is changed so that the time length $T_1$ is equal to a time length $T_2$ which is one of one beat in the tune included in the tune signal Sii. Therefore the tune included in the tune signal Sii has correlation to the sampled part. As a result, if the sampled part is combined with the tune included in the tune signal Sii, the combined tune can be reproduced without giving an audience uncomfortable auditory feeling.

Further the original value of BPM in the sampled part and the sampled part are stored in the memory 14 so that it is easy to read the original value and convert it.

In the case that the present invention is adapted to the reproduction of the tunes for dancing in the nightclub, the combined tune between the sampled tune and the another tune is reproduced in a good rhythm so that it is easy to keep on dancing comfortably.

In the processing in the Step S9 and S13, combining the tune each other is performed on the basis of the designation by the disc jockey. However, in addition to this manner, since the value of BPM is detected, the timing of the beats in the tune signal Sii may be detected at the same time of detection of the value of BPM, and the sampling signal Sp may be started to reproduce at the detected timing of the beats.

Specifically, the sampling signal Sp may be started to reproduce at the timing of the beats which is detected at first after the designation of combining is performed by the disc jockey.

According to this construction, the timing of the beats in the tune signal Sii is synchronized with the timing of the beats in the sampled part while the sampled part is reproduced repeatedly, so that if the sampled signal is combined with the tune included in the tune signal Sii, the rhythms of the sampled signal and the tune are synchronized with each other. As a result, the combined tune can be reproduced without giving an audience uncomfortable auditory feeling.

In the embodiment as shown in FIG. 4 and FIG. 5, the time length of one beat in the sampled part is controlled so that the timing of each beat in the sampled part is synchronized with the timing of each beat in the tune signal Sii. However, in addition to this manner, the time length of one beat in the sampled part may be controlled so that the time length of one beat in the sampled part becomes a natural number multiple of the time length of one beat in the tune signal Sii, or the time length of one beat in the sampled part becomes a fraction with denominator indicated by natural number of the time length of one beat in the tune signal Sii. As a result, the combined tune can be reproduced without getting out of rhythm, people can keep on dancing in constant rhythm.

Further the above-mentioned embodiment, sampling the part of the tune and combining it with another tune are explained as a embodiment. However, in addition to this manner, the present invention can be adapted to another embodiment as follows: If a tune has a very short reproduction time in total, the total reproduction time may be expanded and contracted, or the cycle period of repeating of the total reproduction time may be controlled.

The invention may be embodied in other specific forms without departing from the the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

**Claims**

1.  An apparatus for reproducing one audio information with another audio information characterized in that said apparatus comprises:

    a detecting device (15) for detecting the first time length between each beat and the next in the another audio information, and
    an adjusting device (24) for adjusting the second time length between each beat and the next in the one audio information so that the ratio of the second time length to the first time length is indicted as natural number or the reciprocal of natural number.

2.  An apparatus according to claim 1, characterized in that said adjusting device (24) adjusts the second time length so that the ratio is indicted as 1.

3.  An apparatus according to claim 1 or 2, characterized in that said apparatus further comprises a memory device (14) for memorizing the one audio information and the second time length in advance, and a reading device (13) for reading the memorized one audio information and the memorized second time length.

4.  An apparatus according to claim 1, 2, or 3, characterized in that said apparatus further comprises an combining device (17) for synchronizing a start timing of each beat having the adjusted second time length in the one audio information with that of each beat in the another audio information while combining the one audio information with the another audio information.

5.  An apparatus for reproducing repeatedly one audio information to reproduce the repeated audio information with another audio information characterized in that said apparatus comprises:

    a detecting device (15) for detecting a time length between each beat and the next in the another audio information;
    a designating device (18) for designating the number of beats corresponding to the cycle period of the repeated audio information, and
    a repeating device (24) for repeating the one audio information on the basis of the detected time length and the designated number of beats.

6.  An apparatus according to claim 5, characterized in that said repeating device (24) synchronizes a timing of each beat in the another audio information with that of each beat in the one audio information while repeating the one audio information on the basis of the detected time length and the designated number of beats.

7.  A method of reproducing one audio information with another audio information characterized in that said method comprises:

    a detecting process of detecting the first time length between each beat and the next in the another audio information, and
    an adjusting process of adjusting the second time length between each beat and the next in the one audio information so that the ratio of the second time length to the first time length is indicted as natural number or the reciprocal of natural number.

8.  A method according to claim 7, characterized in that said adjusting process adjusts the second time length so that the ratio is indicted as 1.

**9.** A method according to claim 7 or 8, characterized in that said method further comprises a memorizing process of memorizing previously the one audio information and the second time length in a memory device, and a reading process of reading the memorized one audio information and the memorized second time length memorized.

**10.** A method according to claim 7, 8, or 9, characterized in that said method further comprises an combining process of synchronizing a start timing of each beat having the adjusted second time length in the one audio information with that of each beat in the another audio information while combining the one audio information with the another audio information.

**11.** A method of reproducing repeatedly one audio information to reproduce the repeated audio information with another audio information characterized in that said method comprises:

a detecting process of detecting a time length between each beat and the next in the another audio information;

a designating process of designating the number of beats corresponding to the cycle period of the repeated audio information, and

a repeating process of repeating the one audio information on the basis of the detected time length and the designated number of beats.

**12.** A method according to claim 11, characterized in that said repeating process synchronizes a timing of each beat in the another audio information with that of each beat in the one audio information while repeating the one audio information on the basis of the detected time length and the designated number of beats.

# FIG. 1

# FIG. 2

EP 1 073 055 A2

# FIG. 3

# FIG. 4

Reproduction

S6 Detecting BPM

S7 mode ?

Cycle period designation mode

Expansion & Contraction mode

S8 Calculating the designated number of beats and reproduction time

NO

S9 Start reproducing ?

YES

S10 Read data at the speed corresponding to reproduction time

YES

S11 Repeat ?

NO

End

S12 Calculating the designated number of beats and reproduction time

NO

S13 Start reproducing ?

YES

S14 Read data at the same speed of sampling

YES    NO

S15 Cycle period expired ?

YES

S16 Continuing ?

NO

# FIG. 5

# FIG. 6